# EUROPEAN PATENT APPLICATION

(11) **EP 4 307 826 A1**
(43) Date of publication of application: **17.01.2024**
(21) Application number: 22184344.4
(22) Date of filing: 12.07.2022
(51) Int. Cl.: H04W 76/15, H04W 8/20, H04W 24/04, H04W 36/14, H04W 36/18, H04W 60/00, H04W 76/22, H04W 76/27

(54) **METHOD FOR SAFEGUARDING AGAINST COMMUNICATION FAILURE**

(71) Applicant: NTT DOCOMO, INC., Chiyoda-Ku Tokyo 100-6150 (JP)
(72) Inventor: SAMA, Malla Reddy, 80687 Munich (DE); GUERZONI, Riccardo, 80687 Munich (DE); THAKOLSRI, Srisakul, 80687 Munich (DE); MINOKUCHI, Atsushi, Tokyo, 100-6150 (JP); TANIGUCHI, Masato, Tokyo, 100-6150 (JP); MIN, Tianyang, Tokyo, 100-6150 (JP); KIESS, Wolfgang, 56218 Mühlheim-Kärlich (DE)
(74) Representative: Viering, Jentschura & Partner mbB Patent- und Rechtsanwälte

(57) **Abstract**

According to one embodiment, a method for safeguarding against communication failure is described comprising receiving a first request from a mobile terminal for an establishment of a communication session, establishing a first communication session via a first radio access network, receiving a second request from the mobile terminal for a communication session, determining whether the second communication session is to be a backup communication session for the first communication session, and establishing a second communication session via the second radio access network, wherein, if the second communication session is to be a backup communication session for the first communication session, the second radio access network is controlled to avoid allocation of communication resources for data exchange between the mobile terminal and the terminal via the second communication until being notified otherwise.

## Description

The present disclosure relates to communication methods for safeguarding against communication failure.

In communication, in particular communication over mobile communication networks, reliability plays an important role. This includes that a communication network should be quickly capable of compensating a failure of a communication connection. While this may be achieved by providing redundant resources, .e.g. providing two parallel communication connections in parallel for a communication, this may be not desirable since it may lead to a waste of communication resources in case there is no failure and thus communication resources for a backup path are never used.

Accordingly, resource-efficient approaches for safeguarding against communication failure are desirable.

According to one embodiment, a method for safeguarding against communication failure is provided including receiving a first request from a mobile terminal for an establishment of a communication session between the mobile terminal and a server, wherein the communication session is requested to be provided via a first radio access network, establishing a first communication session via the first radio access network between the mobile terminal and the server, receiving a second request from the mobile terminal for a communication session between the mobile terminal and the server, wherein the communication session is requested to be provided via a second radio access network, determining whether the second communication session is to be a backup communication session for the first communication session and establishing a second communication session via the second radio access network between the mobile terminal and the server, wherein, if the second communication session is to be a backup communication session for the first communication session, the second radio access network is controlled to avoid allocation of communication resources for data exchange between the mobile terminal and the terminal via the second communication until being notified otherwise.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a radio communication system.
Figure 2 shows an example where a user equipment (UE) is connected to a first radio access network (RAN) and to a second RAN belonging to the same PLMN (public land mobile network9.
Figure 3 shows an example where a UE is connected to a first RAN and to a second RAN belonging to a first PLMN and a second PLMN, respectively.
Figure 4 shows a flow diagram illustrating a registration procedure for the single SIM (subscriber identity module) scenario of figure 2.
Figure 5 shows a flow diagram illustrating a PDU (protocol data unit) session establishment for the single SIM scenario of figure 2.
Figure 6 illustrates the failure handling in case of a failure of an edge server.
Figure 7 illustrates the failure handling in case of a failure of a radio access network.
Figure 8 illustrates paging management according to an embodiment.
Figure 9 illustrates mobility management according to an embodiment.
Figure 10 shows a flow diagram illustrating a registration procedure for the multi SIM scenario of figure 3.
Figure 11 shows a flow diagram illustrating a PDU session establishment for the multi SIM scenario of figure 3.
Figure 12 illustrates the failure handling in case of a failure of a PLMN
Figure 13 shows a flow diagram illustrating a method for safeguarding against communication failure according to an embodiment.
Figure 14 shows a flow diagram illustrating a method for performing communication with a server according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

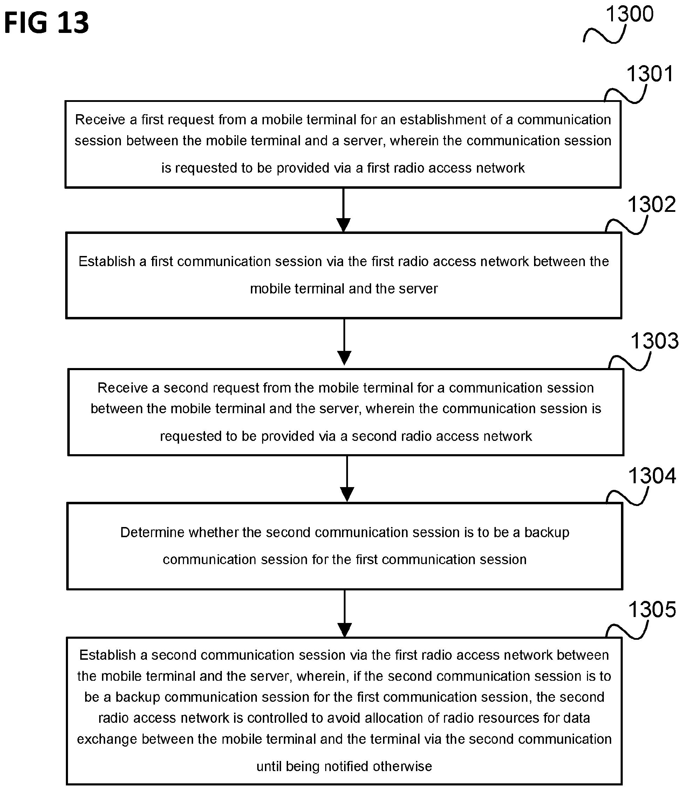

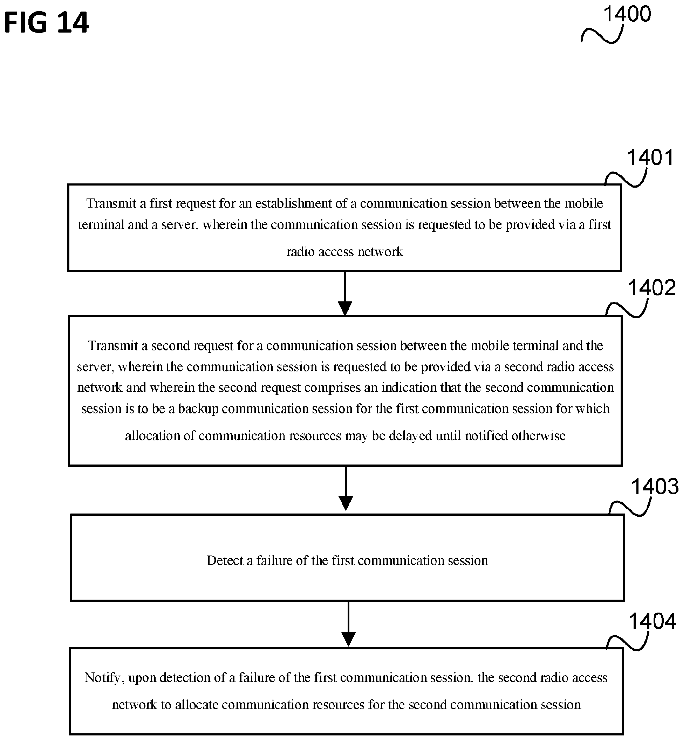

Various examples corresponding to aspects of this disclosure are described below:
Example 1 is a method for safeguarding against communication failure as illustrated in figure 13.
Example 2 is the method of Example 1, further including allocating communication resources for the second communication session upon failure of the first communication session.
Example 3 is the method of Example 1 or 2, including detecting failure of the first communication session and notifying the second radio access network to allocate communication resources for the second communication session upon detecting failure of the first communication session.
Example 4 is the method of Example 3, wherein detecting failure of the first communication session includes detecting a failure of the first radio access network and/or one or more network functions providing the first communication session.
Example 5 is the method of any one of Examples 2 to 4, wherein notifying the second radio access network to allocate communication resources for the second communication session includes triggering a paging of the mobile terminal via the second radio access network.
Example 6 is the method of any one of Examples 2 to 4, including triggering notifying the second radio access network to allocate communication resources for the second communication session by sending downlink data to a user plane function providing the second communication session.
Example 7 is the method of any one of Examples 1 to 6, including receiving a failure indication from the mobile terminal indicating a failure of the first communication session and notifying the second radio access network to allocate communication resources for the second communication session upon reception of the failure indication. Example 8 is the method of any one of Examples 1 to 7, including switching the mobile terminal into Radio Resource Control idle or inactive state upon establishment of the second communication session
Example 9 is the method of any one of Examples 1 to 8, including detecting failure of the first communication session and switching the mobile terminal to Radio Resource Control connected state upon detecting failure of the first communication session.
Example 10 is the method of any one of Examples 1 to 9, wherein the second request from the mobile terminal for the communication session provided by the second radio access network to the server includes an indication that the second communication session is to be a backup communication session for the first communication session and determining whether the second communication session is to be a backup communication session for the first communication session includes determining that the second communication session is to be a backup communication session for the first communication session based on the indication.
Example 11 is the method of any one of Examples 1 to 10, wherein the first communication session and the second communication session are Protocol Data Unit sessions.
Example 12 is the method of any one of Examples 1 to 11, wherein server implements an application function and the first communication session and the second communication session are communication sessions with the application function.
Example 13 is the method of any one of Examples 1 to 12, wherein the mobile terminal has a subscription with a communication network including both the first radio access network and the second radio access network
Example 14 is the method of Example 13, wherein the first communication session and the second communication session are established by the same session management component of the communication network.
Example 15 is the method of any one of Examples 1 to 14, wherein the mobile terminal has a first subscription with a first communication network including the first radio access network and a second subscription with a second communication network including the second radio access network
Example 16 is the method of Example 1 to 15, wherein the first communication session is established by a first session management component belonging to the first communication network and the second communication session is established by a second session management component belonging to the second communication network.
Example 17 is the method of any one of Examples 1 to 16, wherein the first communication session and the second communication session are provided via the same User Plane Function.
Example 18 is the method of any one of Examples 1 to 17, wherein the first communication session and the second communication session are provided via different User Plane Functions.
Example 19 is the method of any one of Examples 1 to 18, including receiving a first registration request from the mobile terminal to register the mobile terminal in the first communication network and registering the mobile terminal in the first communication network, before receiving the first request and receiving a second registration request from the mobile terminal to register the mobile terminal in the second communication network and registering the mobile terminal in the second communication network, before receiving the second request, wherein the second registration request includes an indication that the registration in the second communication network is a backup registration and wherein determining whether the second communication session is to be a backup communication session for the first communication session includes determining that the second communication session is to be a backup communication session for the first communication session based on the indication.
Example 20 is the method of any one of Examples 1 to 19, wherein the communication resources include at least one of radio resources, control plane resources and user plane resources.
Example 21 is a communication network including the first radio access network and the second radio access network and one or more controlling components configured to perform the method of any one of Examples 1 to 20.
Example 22 is the communication network of Example 21, wherein the one or more controlling components include at least one Access and Mobility Management Function and/or at least one Session Management Function.
Example 23 is a method for performing communication with a server as illustrated in figure 14.
Example 24 is a mobile terminal configured to perform the method of Example 23.

It should be noted that one or more of the features of any of the examples above may be combined with any one of the other examples. In particular, the Examples described in context of the device are analogously valid for the method.

According to further embodiments, a computer program and a computer readable medium including instructions, which, when executed by a computer, make the computer perform the method of any one of the above Examples are provided.

In the following, various examples will be described in more detail.

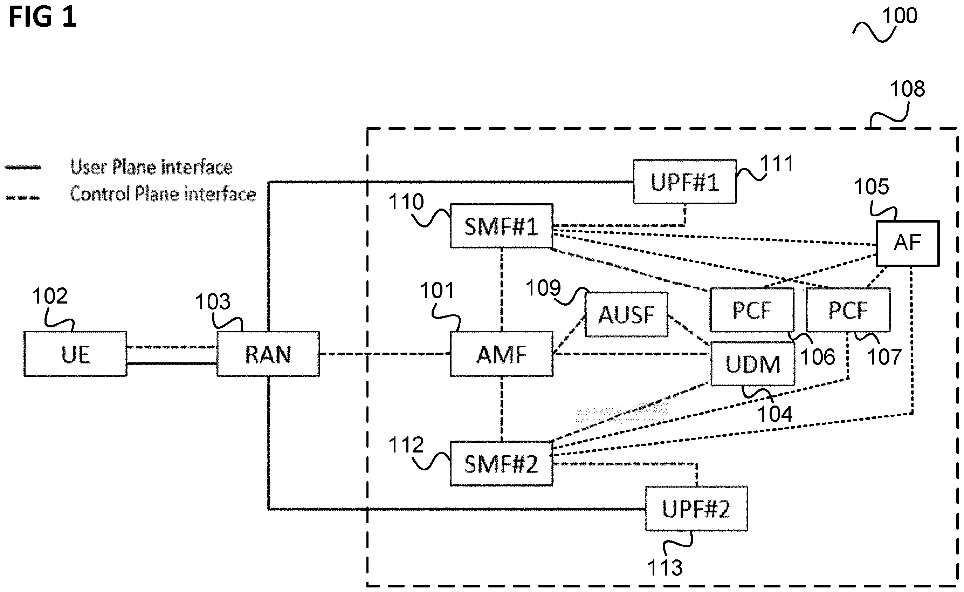

Figure 1 shows a radio communication system 100, for example configured according to 5G (Fifth Generation) as specified by 3GPP (Third Generation Partnership Project), i.e. for example a 5GS.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (CN, here 5GC) 108 including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111 a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100.

The AF 105 enables an application to request the 5G system 100 to support specific QoS (Quality of Service) policies for a UE 102 that establishes a PDU session to provide a communication service for that application.

In the example of figure 1, the UE 102 is connected with a single RAN 103. However, the UE 102 may also be connected to multiple RANs. The RANs may belong to the same PLMN (so the UE can use both with a single SIM (Subscriber Identity Module) or may belong to different PLMNs (so the UE has multiple SIMs (e.g. is a Multi-USIM UE) to connect to them).

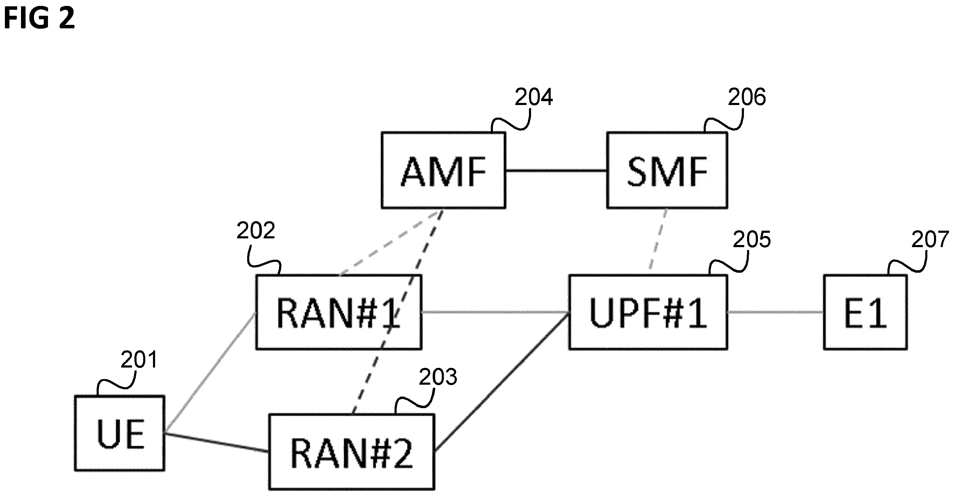

Figure 2 shows an example where a UE 201 is connected to a first RAN 202 and to a second RAN 203 belonging to the same PLMN

The RANs 202, 203 are connected to the same AMF 204 and UPF 205. The AMF 204 and the UPF 205 are connected to an SMF 206 and the UPF 205 is connected to an application function 207, e.g. corresponding to application function 105, here assumed to run in/on an edge computing node E1.

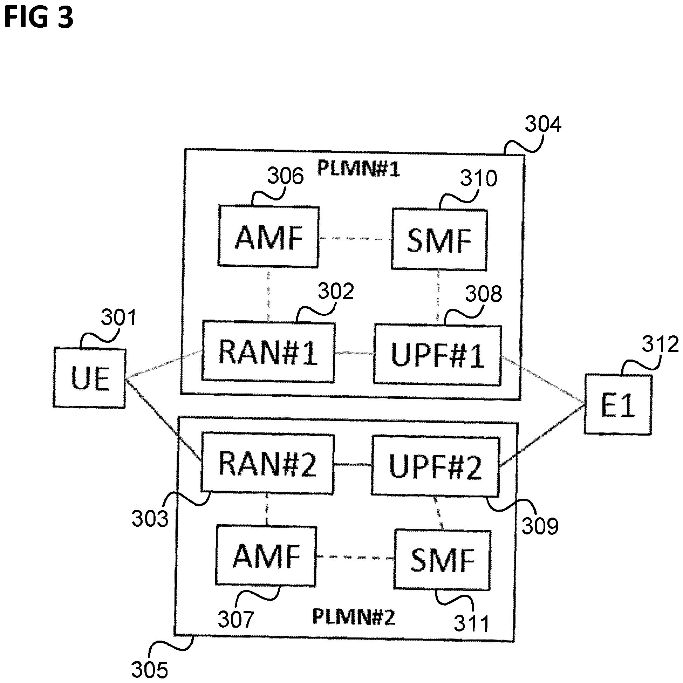

Figure 3 shows an example where a UE 301 is connected to a first RAN 302 and to a second RAN 303 belonging to a first PLMN 304 and a second PLMN 305, respectively. Each PLMN 304, 305 has its own AMF 306, 307 connected to the respective RAN 302, 303, a respective UPF 308, 309 connected to the respective RAN 302, 303 and a respective SMF 310, 311 connected to the respective AMF 306, 307 and UPF 308, 309.

Each RAN 302, 303 is connected via the respective UPF 308, 309 to an application function in E1 312.

In both figure 1 and figure 2 there is thus a first path via the first RAN 202, 302 to the application function in E1 207, 312 and a second path via the second RAN 203, 303 to the application function in E1 207, 312.

The second path may be a backup path for the first path (which acts as the "main" path).

According to the 5G URLLC (Ultra reliable low latency communications) mechanism, both paths are always on, i.e. activated. So, UE duplicates packets it wants to send to the E1 207, 312 (e.g. according to IEEE FRER (Frame Replication and Elimination) protocol) and forwards them to the same application server. If the E1 207, 312 or application function in E1 207, 312 is down, the sessions of both paths are released.

According to various embodiments, in contrast, the second path (i.e. the backup or redundant path) and the nodes forming it (at least with respect to this path) are kept in a sleep (also referred to as silent) mode until they are needed as backup for the first path. In the example of figure 3 this relates to the second PLMN 305. In particular, for example, no radio resources are allocated for the second path until it is needed as backup for the first path.

It should be noted that with respect to the RAN-edge connection, a RAN 203, 303 may periodically exchange health check messages with an E1 207, 312 to detect whether the E1 has a failure or is no longer reachable and may then send traffic over a backup both, possibly to a backup edge server.

In the following, first, embodiments related to the single SIM case of figure 2 are discussed and second, further below, embodiments related to the multiple SIM case of figure 3 are discussed.

In the scenario of figure 2, the UE 201 has a N1 (NAS (Non-Access Stratum) connection) per RAN (e.g. via a respective base station or RAN node), i.e., the UE 201 has two NAS connections.

The AMF 204 maintains two N2 interfaces i.e., one with the first RAN 202 and another one with the second RAN 203. The UE 201 and the network side (e.g. AMF 204 and/or RAN 203 and/or further components) co-ordinate and determine which of the paths is the main path and which one is the backup path. As long as the main path works correctly, the backup (i.e. redundant) path is inactive (or "silent") and user plane traffic is exchanged over the main path (active path).

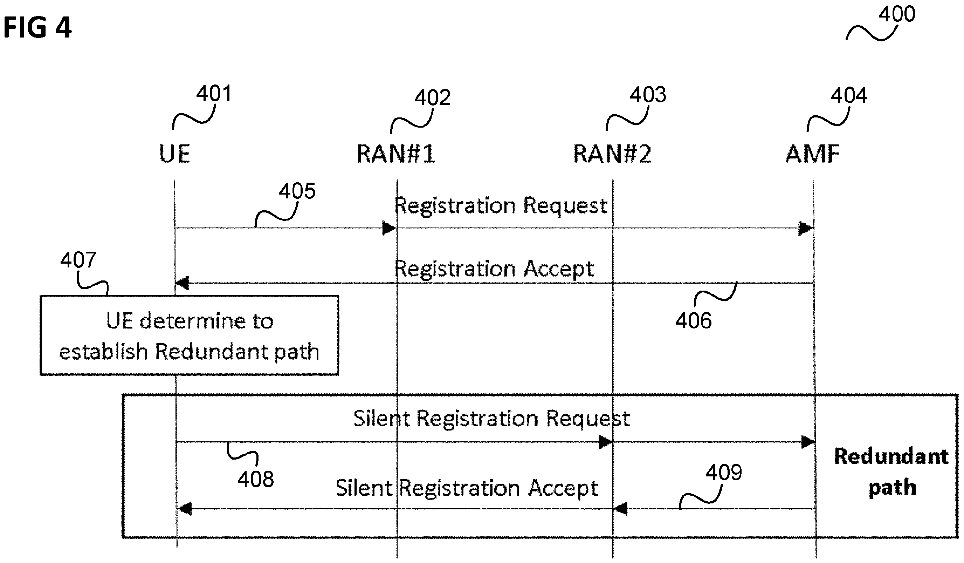

Figure 4 shows a flow diagram 400 illustrating a registration procedure for the single SIM scenario of figure 2.

A UE 401 corresponding to UE 201, a first RAN 402 corresponding to the first RAN 202, a second RAN 403 corresponding to the second RAN 203 and an AMF 404 corresponding to AMF 204 are involved in the flow.

In 405, the UE 401 requests the registration for the main path with the network, i.e. via the first RAN 402, which the AMF 404 accepts in 406.

In 407, the UE 401 determines that a backup path should be established.

Accordingly, in 408, the UE 401 finds the second RAN 402 for the backup path and sends a Silent Registration Request to the network, i.e. a registration request message which includes an indication that the request is for backup (or redundancy) purpose.

In the Silent Registration Request, the UE 401 can indicate the allocated GUAMI (Global Unique AMF ID) of the AMF 404 for the registration of 405 and 406 via the first RAN 402, so that the second RAN 403 can select the same AMF 404 as for the main path. Alternatively, if the UE 401 does not provide the GUAMI in the silent registration request, the RAN 403 can select a new AMF. The new AMF identifies the (old) AMF 404 from the UDM 104, so that the new AMF can extract the UE context from the (old) AMF 404.

The purpose of the silent registration is that the UE context is created in the second RAN 403, network functions and core network for a proactive failure handling and reduced service interruption time (e.g. such that it is not required to communicate with CN control plane (CP) for N3 establishment). The network side configures network components accordingly and in 409 the AMF 404 sends a registration accept for the second path to the UE 401 but the second RAN 403 does not allocate any radio resources to the UE 401 (until the redundant path is activated).

The AMF 404 includes a redundancy policy in RRC Inactive Assistance Information which it transmits to the second RAN 403, which specifies the RRC policy for the backup path to the RAN and also indicates to the RAN to use the RRC Inactive mechanism, i.e. to keep the second path inactive (until it should be activated as a backup for the first path). The AMF 404 and the UE 401 maintain two sets of state information, one for each path.

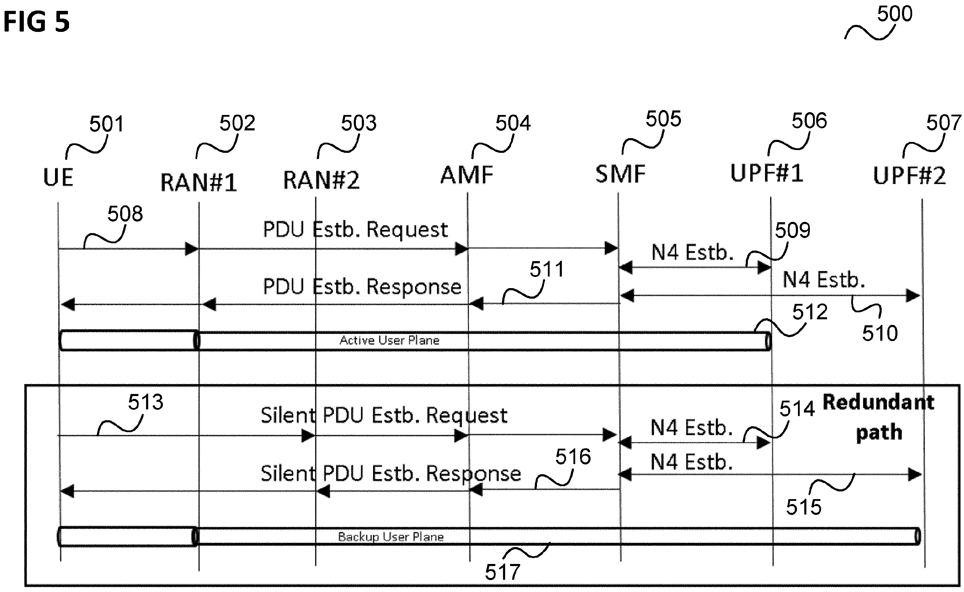

Figure 5 shows a flow diagram 500 illustrating a PDU session establishment for the single SIM scenario of figure 2.

A UE 501 corresponding to UE 201, a first RAN 502 corresponding to the first RAN 202, a second RAN 503 corresponding to the second RAN 203, an AMF 504 corresponding to the AMF 204, an SMF 505 corresponding to the SMF 206, a first UPF 506 and a second UPF 507 are involved in the flow. It should be noted that the paths use different UPFs in this example but they may also be the same UPF as in the example of figure 2. It should be further noted that paths might also include the intermediate SMF (I-SMF) and/or intermediate UPF (I-UPF) between the RAN and UPF.

In 508, the UE 501 requests PDU session establishment (Estb.) over the first RAN 502 (with which it has an registration according to figure 4).

In reaction to the request, the SMF 505 establishes an active N3 interface with the first UPF 506 in 509 and a redundant (backup) N3 interface with the second UPF 507 in 510, based on a redundancy profile. In 511 the SMF 505 acknowledges the PDU session establishment.

In 512, the UE 501 then has an active user plane connection with the first UPF 506.

In 513, the UE sends a Silent PDU Session Request over the second RAN 503 (with which it has a silent registration according to figure 4).

The Silent PDU session Request includes the same parameters (e.g., S-NSSAI, DNN (Data NetworkName) and same or different PDU Session ID) as for the active PDU session (i.e. the one requested in 508), but it includes an indication that it is for a redundant path.

The AMF 504 selects the same SMF 505 and sends the silent PDU Session Request to it.

The SMF 504 checks the PDU Session context in 514 and sends the new flow details with regard to the second RAN 503 to the second UPF 507 in 515.

In 516, the SMF 505 sends a PDU Session Accept with the first UPF 506 and second UPF 507 details to the second RAN 503 for N3 establishment.

In the PDU Session Accept message, the SMF 505 indicates the active node as the first UPF 506 and the redundant node as the second UPF 507.

In 517, the UE 501 then has a backup user plane connection with the second UPF 507. However, after reception of the PDU Session Accept message of 516, the UE 501 enters into the RRC_Inactive state, i.e. the second RAN 503 does not allocate any radio resources to the UE 501.

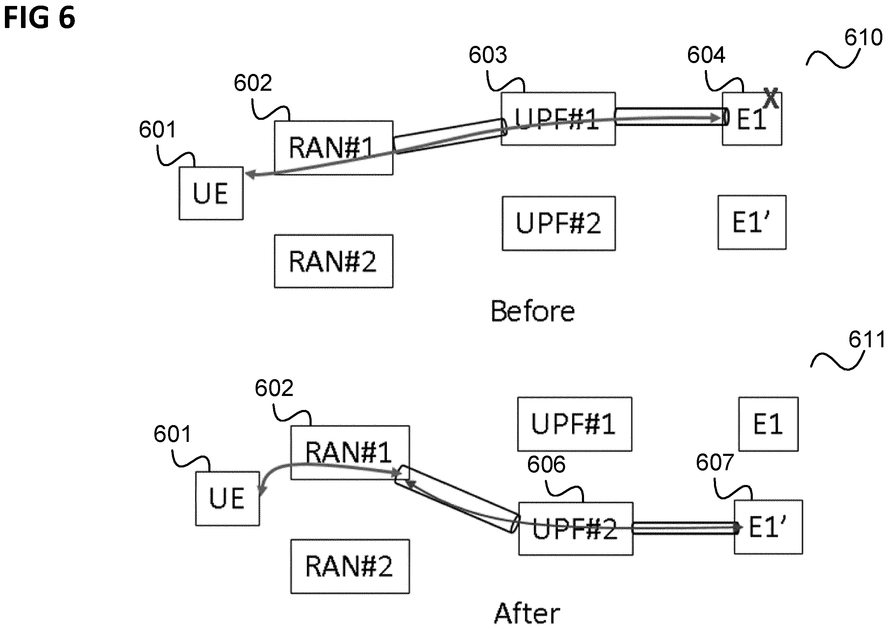

Figure 6 illustrates the failure handling in case of a failure of the E1 604.

Before the failure (see first diagram 610), the UE 601 has a connection to the E1 604 via the first RAN 602 and the first UPF 603.

After the failure (i.e., failure of E1 604, see second diagram 611), the UE 601 has a connection to a backup E1 607 via the first RAN 602 and the second UPF 606.

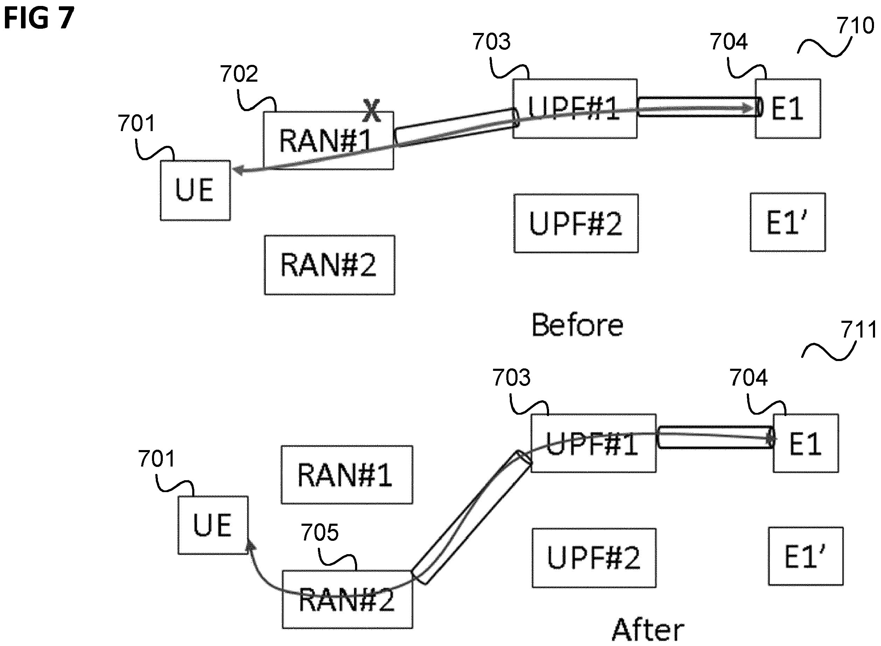

Figure 7 illustrates the failure handling in case of a failure of the first RAN 702.

Before the failure (see first diagram 710), the UE 701 has a connection to the E1 704 via the first RAN 702 and the first UPF 703.

After the failure (i.e., failure of RAN 702, see second diagram 711), the UE 701 has a connection to the E1 704 via the second RAN 705 and the first UPF 703.

The UE 701 may detect a failure of the first RAN 702 in RRC layer and send a RRC connect message to the second RAN 705 upon a failure of the first RAN 702.

The second RAN 705 may detect a failure of the first RAN702 e.g., by exchanging periodic ECHO message over X2 interface and notify to the UE 701 to activate the redundant path e.g., via paging the UE 701 as UE 701 is in RRC IDLE.

The AMF 504 may also notify the failure of the first RAN 702 to the second RAN 705 over the N2 interface, so that the second RAN 705 notifies the UE 701 to activate the redundant path e.g., via paging the UE 701 as UE 701 is in RRC IDLE.

It should be noted that in case the UE 701 or the second RAN 705 detects the failure of the first RAN 702, the second RAN 705 may notify the AMF about the change of path, so that the AMF updates the UE context.

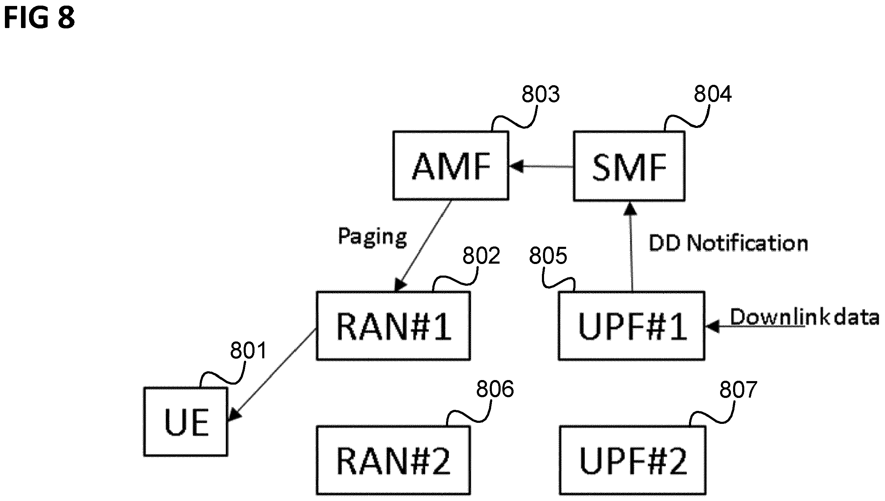

Figure 8 illustrates paging management according to an embodiment.

The AMF 803 determines the paging based on the context including redundancy, i.e., the AMF 803 takes into account that there are active and redundant nodes.

So, when the active path and the backup path are established according to figure 5 and the first UPF 805 receives downlink data for the UE 801 and notifies the SMF 804 about it (which in turn notifies the AMF 803 with a downlink notification), the AMF 803 initiates paging via the first RAN 802.

It may be the case that the AMF 803 needs to page all RAN nodes in the registration area (assuming that the first RAN 802 and the second RAN 806 are part of the tracking area). In this case, both the first RAN 802 and the second RAN 806 send the paging (i.e. one or more paging messages) to the UE 801. Once the UE 801 changes from idle to connected, the UE 801 sends service request over the first RAN 802, but not to the second RAN 806.

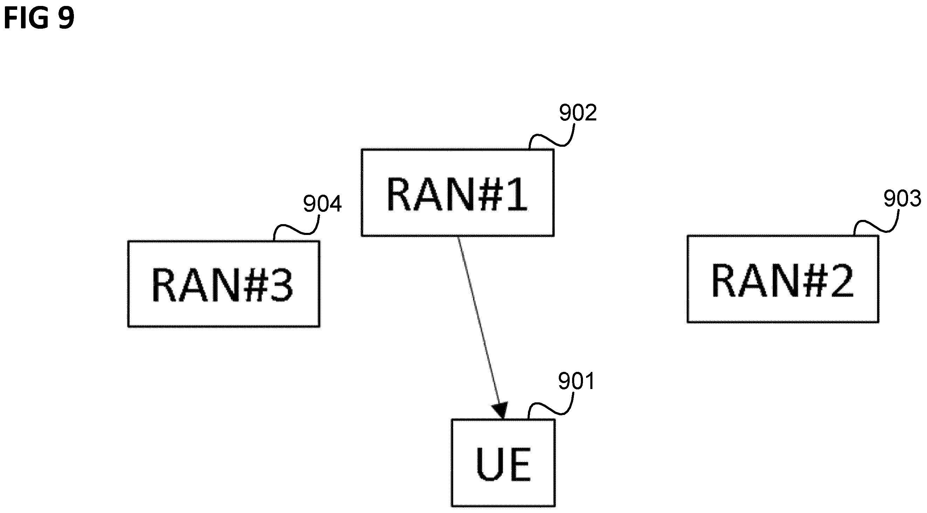

Figure 9 illustrates mobility management according to an embodiment.

It is assumed that the second RAN 903 covers both the coverage area of the first RAN 902 and a third RAN 903 and that the UE 901 moves from the coverage area of the first RAN 902 to the coverage area of the third RAN 904. In this case, according to one embodiment, Xn handover takes places and the UE context is updated with the third RAN 903 as active RAN (e.g. corresponding RAN nodes are set as active nodes). Similar mechanism may be applied for redundant node handover (i.e. handover from the second RAN 903 to a fourth RAN).

Now, in the following, embodiments related to the multiple SIM case of figure 3 are discussed.

These embodiments relate to the usage of a Multi-USIM UE 301 for a redundancy mechanism. For this, the UE 301 and the PLMNs 304, 305 exchange redundancy support capabilities, e.g., the UE sends the redundancy support capabilities (e.g., support of silent or redundancy registration) to the PLMN's network; similarly, the PLMN's network also shares the redundancy support capabilities to the UE. Based on capability support, the UE 301 may determine the active PLMN 304 and the redundant PLMN 305. The UE 301 then registers in both PLMNs but keeps one of the PLMNs in redundant and/or silent mode.

The UE 301 provides details about the backup PLMN 305 details to the E1 312 (generally application server (AS) or application function (AF)), so that the E1 312 does not send (e.g. forward) data packets via the backup path.

Upon detection of failure, the UE 301 (or the E1 312) activates the redundant (i.e. backup) path and data is exchanged between the UE 301 and the E1 312 via the backup path i.e., over a second PLMN 305. For example, for activation, the UE 301 triggers a service request to establish the user plane via the second PLMN 305. In case of activation by the E1 312, the E1 sends a downlink packet over the redundant path so that the backup PLMN 305 pages the UE 301 to activate the user plane connection via the backup PLMN 305.

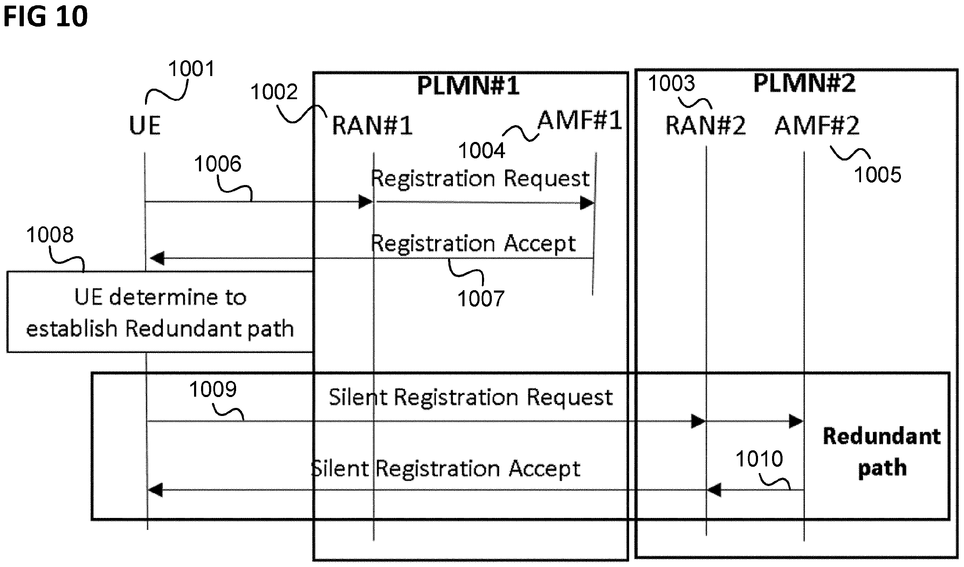

Figure 10 shows a flow diagram 1000 illustrating a registration procedure for the multi SIM scenario of figure 3.

A UE 1001 corresponding to UE 301, a first RAN 1002 corresponding to the first RAN 302, a second RAN 1003 corresponding to the second RAN 303, a first AMF 1004 corresponding to the first AMF 306 and a second AMF 1005 corresponding to the second AMF 307 are involved in the flow.

It is assumed that the UE 1001 determines which PLMN should be the active PLMN 304 and which PLMN should be the redundant (backup) PLMN 305, e.g., based on signalling strength and/or UE subscription, and/or provided operator's policy and/or UE implementation logic.

In 1006, the UE 1001 requests the registration for the main path with the network, i.e. via the first PLMN 304, i.e. via the first RAN 1002. The first AMF 1004 accepts the registration in 1007.

In 1008, the UE 1001 determines that a backup path should be established.

Accordingly, in1009, the UE 1001 sends a Silent Registration Request to the second PLMN 305, i.e. a registration request message which includes an indication that the request is for backup (or redundancy) purpose (i.e. a Redundant Registration Indication included in the request).

Based on this indication, the second PLMN 305 (specifically the second AMF 1005) determines that the registration is for redundancy and registers the UE 1001 in the second PLMN 305.

The purpose of the silent Registration is that UE 1001 context is created in the second PLMN 305 (including network functions, in particular of the core network) proactively for a failure and reducing service interruption time.

The second AMF 1005 acknowledges the registration in 1010. The UE 1001 enters either into RRC Inactive or RRC_IDLE mode.

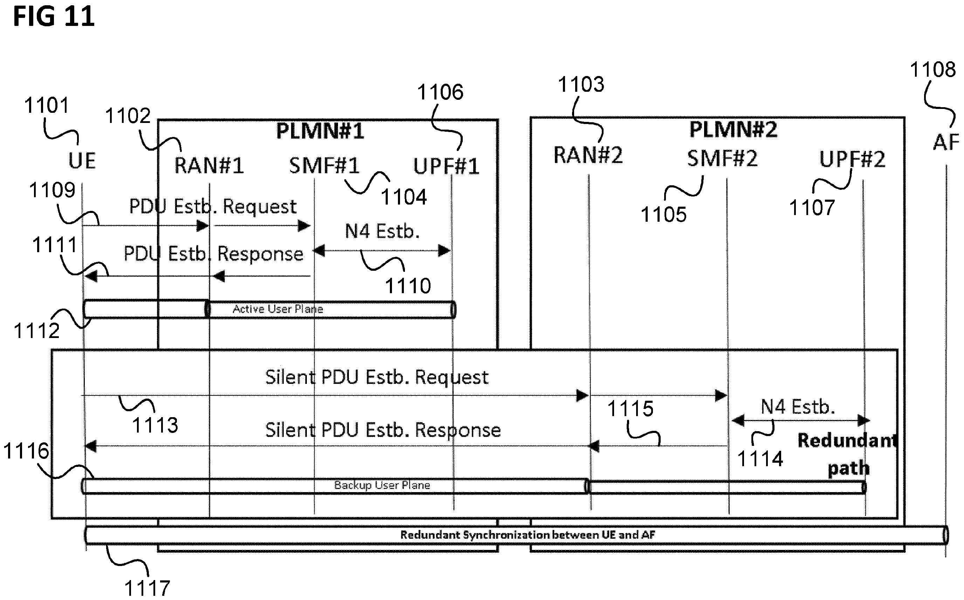

Figure 11 shows a flow diagram 1100 illustrating a PDU session establishment for the multi SIM scenario of figure 3.

A UE 1101 corresponding to UE 301, a first RAN 1102 corresponding to the first RAN 302, a second RAN 1103 corresponding to the second RAN 203, a first SMF 1104 corresponding to the first SMF 310, a second SMF 1105 corresponding to the second SMF 311, a first UPF 1106 corresponding to the first UPF 308, a second UPF 1107 corresponding to the second UPF 309 and an edge node 1108 (i.e. an application function running therein) corresponding to the E1 312 are involved in the flow.

It is assumed that both PLMNs 304, 305 are able to connect to the same edge node 1108. In the UE 1101, URSP (UE Route Selection Policy) rules parameters (e.g., S-NSSAI, DNN) might be different between the PLMNs 304, 305 for the same application, but UE 1101 can reach the same application server via the different PLMNs 304, 305.

In 1109, the UE 1101 requests PDU session establishment (Estb.) over the first RAN 1102 (with which it has an registration according to figure 10).

In reaction to the request, the first SMF 1104 establishes an active N3 interface with the first UPF 1106 in 1110. In 1111, the first SMF 1104 acknowledges the PDU session establishment.

The UE 1101 then has an (active) user plane connection to the first UPF 1106 in 1112.

In 1113, the UE 1101 sends a Silent PDU Session Request over the second RAN 1103 (with which it has a silent registration according to figure 10) for a session to the same E1 1108.

In 1114, the second SMF 1105 creates a corresponding PDU Session context and acknowledges the PDU Session request in 1115. Since it is a silent PDU Session, no resources are allocated in the second UPF 1107 and the second RAN 1103 but only the context is stored.

The UE 1101 then has a (silent) user plane connection to the second UPF 1107 in 1116.

In 1117, the UE 1101 and the E1 1108 synchronize the redundant PLMN 305. Since, the UE 1101 has two different PDU Sessions (and thus two different IP addresses) via different PLMNs 304, 305, the UE 1101 informs the E1 1108 which PLMN (IP address) is used as active session and which one as backup session. Unless the first session fails, the UE 1101 and the E1 1108 communicate only via the active path, not over the redundant path.

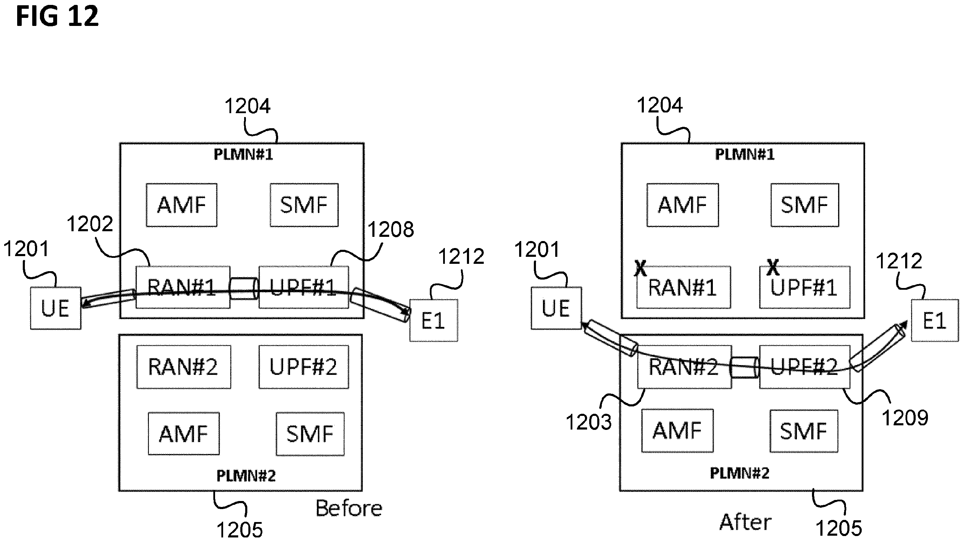

Figure 12 illustrates the failure handling in case of a failure of the first PLMN 1204.

Before the failure (first diagram 1210), the UE 1201 has a connection to the E1 1212 via the first RAN 1202 and the first UPF 1208.

After the failure (second diagram 1211), the UE 1201 has a connection to the E1 1204 via the second RAN 1203 and the second UPF 1209.

A failure of the first PLMN 1204 (e.g., a failure of the RAN 1202 or a core network function such as UPF 1208) can be detected by the UE and/or the E1 1212. In case of detection by the UE 1201, the UE 1201 changes to RRC active in the redundant PLMN 1205 and activates the redundant path. After that it updates the AF E1 1212 about the activation of the redundant path.

In case of detection by the E1 1212 (i.e. an AF running in the E1), the E1 1212 sends a downlink packet over the redundant path (i.e. via the second PLMN 1205). In this case, the second PLMN 1205 performs paging to the UE 1201 to activate the redundant path.

In the single SIM case of figure 2, the UE 201 may be seen to have a single connection point whereas in the multi SIM case of figure 3, the UE 301 may be seen to have two connection points (to two different PLMNs.)

In the single SIM case, there may be a single control component that establishes a first communication session via the first RAN 202 and the first UPF 205 and a second communication session via the second RAN 203 and the first UPF 205, wherein the second communication session is to be silent (which means for example not used for transmission for useful data).

The failure detection component (which may be the UE 201 or the control component) is configured to detect a failure of the first RAN 202. Upon detection of failure of the first RAN 202 the failure detection component is configured to configure the UE 201, the second RAN 203 and the first UPF 205 to switch the second communication session from silent to active.

In the multi SIM case, there may be a two control components, wherein the first control component establishes a first communication session via the first RAN 302 and the first UPF 308 and the second control point establishes a second communication session via the second RAN 303 and the second UPF 309, wherein the second communication session is to be silent (which means for example not used for transmission for useful data).

The failure detection component (which may be the UE 301, the first control component or the second RAN 303) is configured to detect a failure of the first RAN 302. Upon detection of failure of the first RAN 302, the failure detection component is configured to configure the UE 301, the second RAN 303 and the second UPF 309 to switch the second communication session from silent to active

In summary, according to various embodiments, a method is provided as illustrated in figures 13 and 14.

Figure 13 shows a flow diagram 1300 illustrating a method for safeguarding against communication failure.

In 1301, a first request is received from a mobile terminal for an establishment of a communication session between the mobile terminal and a server, wherein the communication session is requested to be provided via a first radio access network.

In 1302, a first communication session is established via the first radio access network between the mobile terminal and the server.

In 1303, a second request is received from the mobile terminal for a communication session between the mobile terminal and the server, wherein the communication session is requested to be provided via a second radio access network.

In 1304, it is determined whether the second communication session is to be a backup communication session for the first communication session.

In 1305, a second communication session is established via the first radio access network between the mobile terminal and the server, wherein, if the second communication session is to be a backup communication session for the first communication session, the second radio access network is controlled to avoid allocation of communication resources for data exchange between the mobile terminal and the terminal via the second communication until being notified otherwise.

Figure 14 shows a flow diagram 1400 illustrating a method for performing communication with a server.

In 1401, a first request for an establishment of a communication session between a mobile terminal and a server is transmitted from the mobile terminal, wherein the communication session is requested to be provided via a first radio access network.

In 1402, a second request for a communication session between the mobile terminal and the server is transmitted from the mobile terminal, wherein the communication session is requested to be provided via a second radio access network and wherein the second request includes an indication that the second communication session is to be a backup communication session for the first communication session for which allocation of communication resources may be avoided (e.g. delayed) until notified otherwise.

In 1403, a failure of the first communication session is detected by the mobile terminal.

In 1404, upon detection of a failure of the first communication session, the second radio access network is notified by the mobile terminal to allocate communication resources for the second communication session.

According to various embodiments, in other words, a backup (communication) path for an active (communication) path is established but is made silent (or inactive), i.e. no (radio) resources are allocated for the backup path until it is need for backup of the active path because the active path failed.

This means for example that allocation of frequency channels, time slots, radio resource elements etc. for the backup path (i.e. for the second communication session), is delayed (at least for transmission of useful data), until the backup path is activated (i.e. made active to replace the (failed) active path).

The approach of figure 13 and/or 14 thus enables fast recovery of a (user plane) communication session to handle a RAN failure scenarios by establishing a silent (redundant) path over a backup RAN (e.g. one or more backup RAN nodes) without wasting radio resources. Service interruption for the UE in case of a RAN (i.e. the first RAN) failure can thus be reduced without wasting radio resource in case of no failure of the first RAN.

The method of figures 13 and 14 may be performed by components of a communication network and/or a mobile terminal implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

According to various embodiments, a communication network, includes at least one component configured to provide a communication service to access the (application) server; and a detection component configured to detect failure of one or more components and an access component configured to use a redundant path over a redundant network component (providing the second communication session).

The at least one component configured to provide a communication service is for example a component of the first radio access network and/or a core network function. The component can be in first public land mobile network and the redundant network component can be in second public land mobile network or vice versa. The detection component can be a mobile terminal and/or radio access network and/or core network functions and/or application server. The core network function can be Access and Mobility Management Function and/or Session Management Function and/or User plane function and/or Policy charging function and/or Unified Data Management. The redundant component allows registration of the mobile terminal and/or establishment of communication without the allocating the communication resources. The communication resources are for example radio resources allocated by the second radio access network and resources allocated by core network components. The access component can be a mobile terminal and/or application server.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for safeguarding against communication failure comprising:
Receiving a first request from a mobile terminal for an establishment of a communication session between the mobile terminal and a server, wherein the communication session is requested to be provided via a first radio access network;
Establishing a first communication session via the first radio access network between the mobile terminal and the server;
Receiving a second request from the mobile terminal for a communication session between the mobile terminal and the server, wherein the communication session is requested to be provided via a second radio access network;
Determining whether the second communication session is to be a backup communication session for the first communication session; and
Establishing a second communication session via the second radio access network between the mobile terminal and the server, wherein, if the second communication session is to be a backup communication session for the first communication session, the second radio access network is controlled to avoid allocation of communication resources for data exchange between the mobile terminal and the terminal via the second communication session until being notified otherwise.

2. The method of claim 1, further comprising allocating communication resources for the second communication session upon failure of the first communication session.

3. The method of claim 1 or 2, comprising detecting failure of the first communication session and notifying the second radio access network to allocate communication resources for the second communication session upon detecting failure of the first communication session.

4. The method of claim 3, wherein detecting failure of the first communication session comprises detecting a failure of the first radio access network and/or one or more network functions providing the first communication session.

5. The method of any one of claims 2 to 4, wherein notifying the second radio access network to allocate communication resources for the second communication session includes triggering a paging of the mobile terminal via the second radio access network.

6. The method of any one of claims 2 to 4, comprising triggering notifying the second radio access network to allocate communication resources for the second communication session by sending downlink data to a user plane function providing the second communication session.

7. The method of any one of claims 1 to 6, comprising receiving a failure indication from the mobile terminal indicating a failure of the first communication session and notifying the second radio access network to allocate communication resources for the second communication session upon reception of the failure indication.

8. The method of any one of claims 1 to 7,comprising switching the mobile terminal into Radio Resource Control idle or inactive state upon establishment of the second communication session

9. The method of any one of claims 1 to 8, comprising detecting failure of the first communication session and switching the mobile terminal to Radio Resource Control connected state upon detecting failure of the first communication session.

10. The method of any one of claims 1 to 9, wherein the second request from the mobile terminal for the communication session provided by the second radio access network to the server comprises an indication that the second communication session is to be a backup communication session for the first communication session and determining whether the second communication session is to be a backup communication session for the first communication session comprises determining that the second communication session is to be a backup communication session for the first communication session based on the indication.

11. The method of any one of claims 1 to 10, wherein server implements an application function and the first communication session and the second communication session are communication sessions with the application function.

12. The method of any one of claims 1 to 11, comprising receiving a first registration request from the mobile terminal to register the mobile terminal in the first communication network and registering the mobile terminal in the first communication network, before receiving the first request; and
receiving a second registration request from the mobile terminal to register the mobile terminal in the second communication network and registering the mobile terminal in the second communication network, before receiving the second request;
wherein the second registration request comprises an indication that the registration in the second communication network is a backup registration and wherein determining whether the second communication session is to be a backup communication session for the first communication session comprises determining that the second communication session is to be a backup communication session for the first communication session based on the indication.

13. A communication network comprising the first radio access network and the second radio access network and one or more controlling components configured to perform the method of any one of claims 1 to 12.

14. A method for performing communication with a server comprising:
Transmitting, by a mobile terminal, a first request for an establishment of the communication session between a mobile terminal and a server, wherein the communication session is requested to be provided via a first radio access network;
Transmitting, by the mobile terminal, a second request for a communication session between the mobile terminal and the server, wherein the communication session is requested to be provided via a second radio access network and wherein
the second request comprises an indication that the second communication session is to be a backup communication session for the first communication session for which allocation of communication resources may be avoided until notified otherwise;
Detecting, by the mobile terminal, a failure of the first communication session; and
Notifying, by the mobile terminal, upon detection of a failure of the first communication session, the second radio access network to allocate communication resources for the second communication session.

15. A mobile terminal configured to perform the method of claim 14.

## Amended claims

### Amended claims in accordance with Rule 137(2) EPC.

1. A method for safeguarding against communication failure comprising:
Receiving a first request from a mobile terminal (1201) for an establishment of a communication session between the mobile terminal (1201) and a server (1212),
wherein the communication session is requested to be provided via a first radio access network (1202);
Establishing a first communication session via the first radio access network (1202) between the mobile terminal (1201) and the server (1212);
Receiving a second request from the mobile terminal (1201) for a communication session between the mobile terminal (1201) and the server (1212), wherein the communication session is requested to be provided via a second radio access network (1203);
Determining whether the second communication session is to be a backup communication session for the first communication session;
Establishing a second communication session via the second radio access network (1203) between the mobile terminal (1201) and the server (1212), wherein, if the second communication session is to be a backup communication session for the first communication session, the second radio access network (1203) is controlled to avoid allocation of communication resources for data exchange between the mobile terminal (1201) and the server (1212) via the second communication session until being notified otherwise; and
Detecting failure of the first communication session and notifying the second radio access network (1203) to allocate communication resources for the second communication session upon detecting failure of the first communication session,
wherein detecting failure of the first communication session comprises detecting a failure of the first radio access network (1202) and/or of one or more core network functions providing the first communication session.

2. The method of claim 1, further comprising allocating communication resources for the second communication session upon failure of the first communication session.

3. The method of claim 2, wherein notifying the second radio access network (1203) to allocate communication resources for the second communication session includes triggering a paging of the mobile terminal (1201) via the second radio access network (1203).

4. The method of claim 2, comprising triggering notifying the second radio access network (1203) to allocate communication resources for the second communication session by sending downlink data to a user plane function providing the second communication session.

5. The method of any one of claims 1 to 4, comprising receiving a failure indication from the mobile terminal (1201) indicating a failure of the first communication session and notifying the second radio access network (1203) to allocate communication resources for the second communication session upon reception of the failure indication.

6. The method of any one of claims 1 to 5, comprising switching the mobile terminal (1201) into Radio Resource Control idle or inactive state upon establishment of the second communication session

7. The method of any one of claims 1 to 6, comprising detecting failure of the first communication session and switching the mobile terminal (1201) to Radio Resource Control connected state upon detecting failure of the first communication session.

8. The method of any one of claims 1 to 7, wherein the second request from the mobile terminal (1201) for the communication session provided by the second radio access network (1203) to the server (1212) comprises an indication that the second communication session is to be a backup communication session for the first communication session and determining whether the second communication session is to be a backup communication session for the first communication session comprises determining that the second communication session is to be a backup communication session for the first communication session based on the indication.

9. The method of any one of claims 1 to 8, wherein server (1212) implements an application function and the first communication session and the second communication session are communication sessions with the application function.

10. The method of any one of claims 1 to 9, comprising receiving a first registration request from the mobile terminal (1201) to register the mobile terminal (1201) in the first communication network and registering the mobile terminal (1201) in the first communication network, before receiving the first request; and
receiving a second registration request from the mobile terminal (1201) to register the mobile terminal (1201) in the second communication network and registering the mobile terminal (1201) in the second communication network, before receiving the second request;
wherein the second registration request comprises an indication that the registration in the second communication network is a backup registration and wherein determining whether the second communication session is to be a backup communication session for the first communication session comprises determining that the second communication session is to be a backup communication session for the first communication session based on the indication.

11. A communication network comprising the first radio access network (1202) and the second radio access network (1203) and one or more controlling components configured to perform the method of any one of claims 1 to 10.

12. A method for performing communication with a server (1212) comprising:
Transmitting, by a mobile terminal (1201), a first request for an establishment of the communication session between a mobile terminal (1201) and a server (1212), wherein the communication session is requested to be provided via a first radio access network (1202);
Transmitting, by the mobile terminal (1201), a second request for a communication session between the mobile terminal (1201) and the server (1212), wherein the communication session is requested to be provided via a second radio access network (1203) and wherein the second request comprises an indication that the second communication session is to be a backup communication session for the first communication session for which allocation of communication resources may be avoided until notified otherwise;
Detecting, by the mobile terminal (1201), a failure of the first communication session wherein detecting failure of the first communication session comprises detecting a failure of the first radio access network (1202) and/or of one or more core network functions providing the first communication session; and
Notifying, by the mobile terminal (1201), upon detection of a failure of the first communication session, the second radio access network (1203) to allocate communication resources for the second communication session.

13. A mobile terminal (1201) configured to perform the method of claim 12.
